Europäisches Patentamt

European Patent Office

Office européen des brevets

(11) Numéro de publication: **0 050 077**
**B1**

(12) **FASCICULE DE BREVET EUROPEEN**

(45) Date de publication du fascicule du brevet: **13.02.85**

(21) Numéro de dépôt: **81401557.4**

(22) Date de dépôt: **08.10.81**

(51) Int. Cl.⁴: **B 63 G 8/24,** G 01 S 15/08,
G 01 S 15/93

(54) Dispositif de pilotage d'un véhicule sous-marin remorque.

(30) Priorité: **10.10.80 FR 8021645**

(43) Date de publication de la demande:
**21.04.82 Bulletin 82/16**

(45) Mention de la délivrance du brevet:
**13.02.85 Bulletin 85/07**

(84) Etats contractants désignés:
**BE DE GB**

(56) Documents cités:
**DE-A-2 426 268**
**FR-A-2 032 323**
**FR-A-2 136 052**

(73) Titulaire: **ETAT-FRANCAIS représenté par le DELEGUE GENERAL POUR L'ARMEMENT Bureau des Brevets et Inventions de la Délégation Générale pour l'Armement 14, rue Saint-Dominique F-75997 Paris Armées (FR)**

(72) Inventeur: **Maguer, Pierre
2, rue de Reims
F-29219 Le Relecq Kerhuon (FR)**
Inventeur: **Verveur, Jean
23, rue de Keramazé
F-29290 Plouzane (FR)**

Courier Press, Leamington Spa, England.

EP 0 050 077 B1

## Description

La présente invention concerne un perfectionnement aux moyens de pilotage des véhicules sous-marins et notamment d'un véhicule sous-marin remorqué, porteur d'un sonar de cartographie marine à haute définition.

Dans la domaine des véhicules sous-marins on connait différentes sortes de véhicules dont le pilotage est effectué par un pilote se tenant à l'intérieur du véhicule lui-même et dirigeant son véhicule "à vue".

On connait également des véhicules remorqués par un navire tracteur au moyen d'un câble électroporteur, notamment dans le cas où le véhicule doit embarquer un système sonar de détection des objets situés sur les fonds marins. Il est alors fréquent de lester ces véhicules de façon à ce qu'ils se déplacent à une profondeur sensiblement constante de la surface.

Un problème différent se pose lorsque l'on souhaite faire de la cartographie des fonds sous-marins à haute définition. En effet dans ce cas, pour obtenir des résultats de la qualité désirée et reproductibles, il est nécessaire d'asservir l'altitude du véhicule porteur du sonar par rapport au fond marin et non à la surface de l'eau, de façon que le système soit utilisé à une altitude constante du fond.

Il en est ainsi notamment dans le cas d'un système de cartographie comportant deux poissons remorqués portant chacun un sonar latéral et transmettant leurs informations, après multiplexage, au navire porteur, lequel comporte des moyens de visualisation sur écran cathodique avec défilement continu de l'image.

Un dispositif visant à résoudre ce problème est présente dans le brevet FR—A—2 136 052, et comprend une écho-sonore avant verticale ainsi qu'un sonar avant oblique dont les signaux de sortie sont "traités séparément par une chaine élecronique et sont comparés séparément à des valeurs de consigne respectives.

Un tel système a pour inconvénient de ne pas prendre en compte la valeur moyenne des informations provenant des sondeurs, et donc de ne pouvoir anticiper correctement les variations de pente du fond, ni de pouvoir remonter le véhicule au cas où un obstacle se présenterait devant lui.

L'un des buts de l'invention est de permettre un pilotage précis des poissons utilisés dans un tel dispositif de façon à ce que des erreurs de trajectoire ne viennent pas influer sur la qualité des résultants du système.

Un autre but de l'invention est de permettre une remontée rapide du véhicule sous-marin dans le cas où un obstacle se présente sur son chemin où dans le cas où le poisson est descendu à une altitude inférieure à uine altitude minimale donnée.

Un autre but de l'invention est de permettre un asservissement de l'altitude du poisson au fond marin et de tenir compte, en les anticipant, des variations de pente de celui-ci.

Pour ce faire, l'invention concerne un dispositif de pilotage d'un véhicule sous-marin notamment d'un véhicule porteur d'un sonar de cartographie marine à grande définition remorqué par un bateau au moyen d'un câble électroporteur, véhicule comportant un asservissement de sa position à la hauteur du fond et comprenant à sa partie avant:

— un sondeur vertical déterminant son altitude instantanée par rapport au fond, et son électronique associée.

— un sondeur oblique permettant d'anticiper la variation de pente du fond et son électronique associée.

— et une chaine électronique de traitement de signal et d'asservissement de position d'ailerons, comprenant un amplificateur d'asservissement dont le signal de sortie commande le moteur d'entrainement des ailes d'immersion. Selon l'invention, le dispositif comporte en combinaison avec les moyens précités un sondeur horizontal de détection des obstacles situés en avant du véhicule, et son électronique associée et un élément de calcul de l'altitude moyenne du véhicule mesurée au moyen des sondeurs vertical et oblique, le sondeur horizontal et l'élément de calcul de l'altutude moyenne du véhicule agissant sur l'amplificateur d'asservissement pour commander l'entrainement des ailes d'immersion.

Selon l'invention le dispositif comporte un élément de calcul de l'altitude moyenne du véhicule, mesurée au moyen des sondeurs vertical et oblique, laquelle altitude moyenne peut être comparée à une altitude de référence.

Selon d'autres caractéristiques, le dispositif de pilotage comporte également un dispositif de remontée rapide commandé par une alarme dont les paramètres d'alarme sont séparément ou simultanément:

— le franchissement de l'altitude minimale

— la détection d'un obstacle par le sondeur horizontal,

— la détection d'une entrée d'eau à l'intérieur du véhicule.

D'autres caractéristiques apparaitront plus clairement à la lecture de la description plus complète qui va suivre et des figures annexées lesquelles représentent de façon non limitative un mode de réalisation de l'invention.

La figure 1 représente un système de cartographie marine utilisant des poissons remorqués auxquels'applique l'invention.

La figure 2 représente un poisson remorqué auquel s'applique l'invention muni des ses différents capteurs auxquels est associée leur logique de commande.

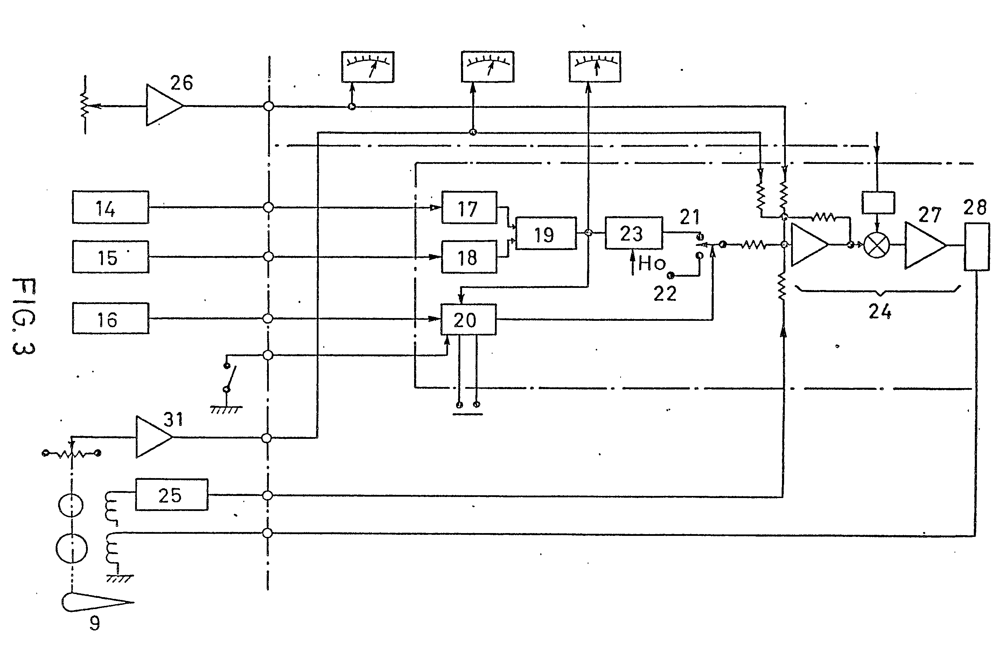

La figure 3 montre de façon plus détaillée un synoptique des moyens de commande et d'asservissement du poisson remorqué.

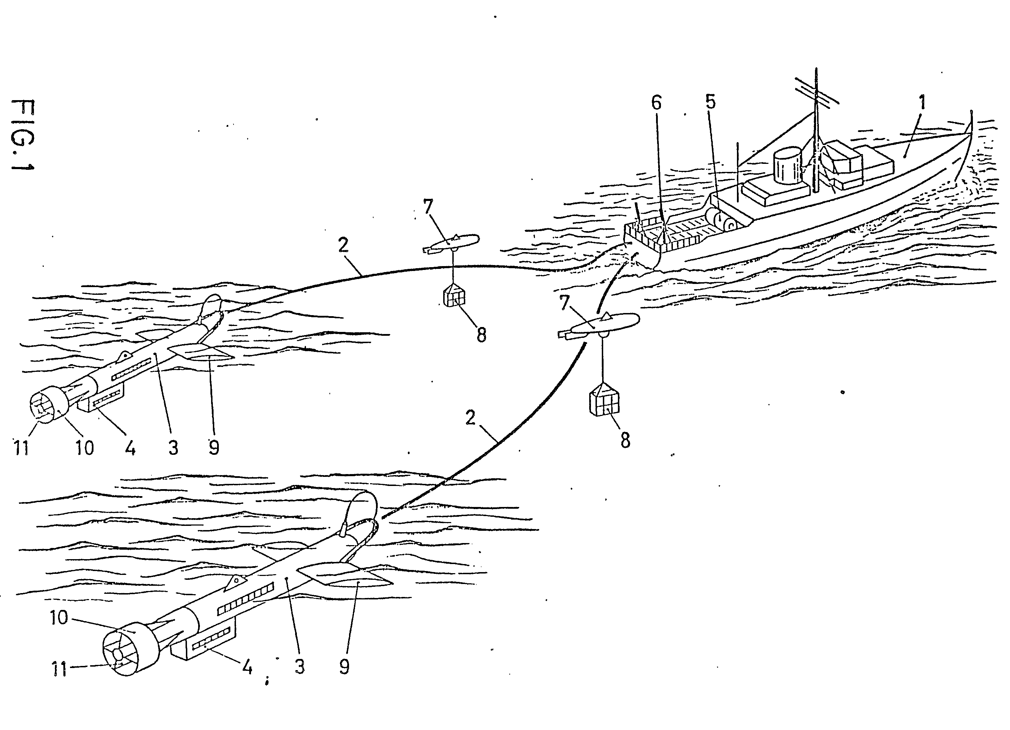

Ainsi qu'on le voit à la figure 1, un système de cartographie sous-marine utilisant des poissons auxquels peut s'appliquer l'invention comporte un bateau 1 qui remarque au moyen de câbles électroporteurs 2 des poissons 3 porteurs de sonars latéraux 4.

Les poissons 3 peuvent être ramenés à bord par enroulement des câbles 2 sur un touret 5, puis au moyen des grues 6. Des floteurs 7 permettent l'emploi de divergents 8 qui viennent compléter le système sonar.

Un tel système sonar est destiné à opérer au fond à des profondeurs allant jusqu'à 100 mètres, à une vitesse de défilement lente (environ 4 noeuds). Les données sonar sont alors visualisées sur un écran cathodique à cadence télévision, avec un défilement continu de l'image et sont simultanément enregistrées d'une manière continue sur des bandes de papier sensible et sur enregistreurs magnétiques.

Pour obtenir une mesure efficace, le poisson 3 est piloté à altitude constante du fond au moyen du dispositif selon l'invention. Pour ce faire, le poisson comporte des ailes d'immersion dont l'angle est asservi aux paramètres de pilotage.

En outre, la queue du véhicule se termine par un ensemble mécanique de stabilisation de gite comportant une couronne fixe 10 et quatre ailerons mobiles 11.

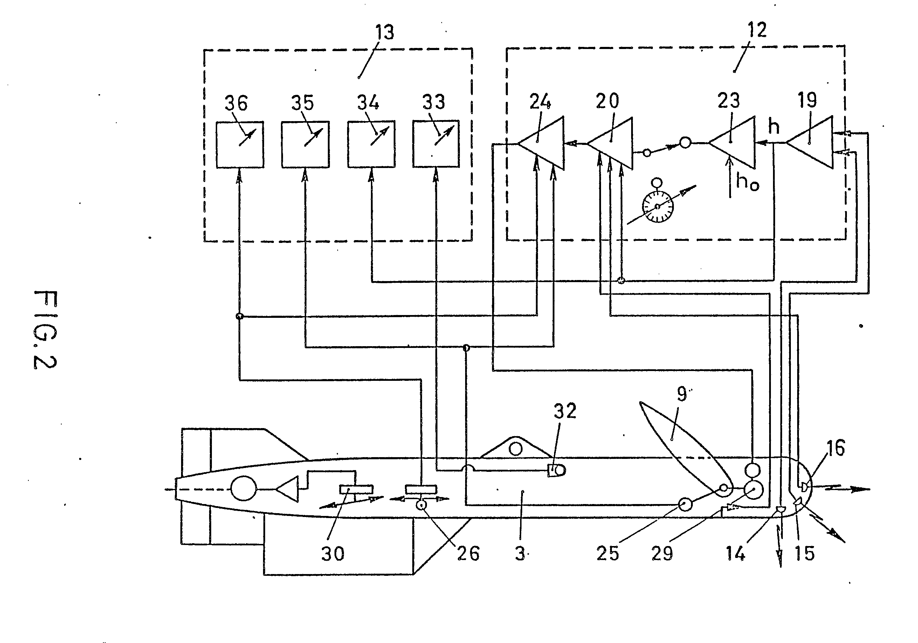

Le dispositif de pilotage, objet de la présente invention, comprend plus précisément, ainsi qu'on le voit représente à la figure 2 un ensemble de capteurs ainsi que le moteur de commande des ailes d'immersion, ces éléments étant portés par le poisson lui-même, une chaîne électronique 12 de traitement de signal et d'asservissement qui, dans l'exemple proposé se trouve sur le navire tracteur 1, reliée au poisson par le câble électroporteur 2 ainsi qu'un tableau de contrôle 13 des paramètres de pilotage.

Ainsi, le poisson 3 porte en sa partie avant un sondeur vertical 14 déterminant son altitude instantanée par rapport au fond ainsi que son électronique associée. Un sondeur oblique à 45° et son électronique associée permet d'anticiper la pente du fond marin et un sondeur horizontal 16 permet la détection des obstacles situés en avant du véhicule.

Les informations fournies par ces sondeurs, dont la fréquence de fonctionnement est de 300 kiloherz, sont émises à partir du véhicule (3) au moyen d'un oscillateur à 300 kHz, un multiplicateur logique possédant un compteurs de commande, et par 3 emetieurs de puissance. La réception de ces informations est faite au moyen de trois étages de commutation émission/réception (un par sondeur), un multiplexeur analogique pour la mise en série des informations, un ampli de réception et de détection et d'un multiplexeur d'addition synchro.

Les hauteurs verticale Hv et obliques Ho sont calculées par des étages de calcul 17 et 18 puis la moyenne de ces deux valeurs est calculée en 19.

La tension de sortie du sondeur horizontal 16 est appliquée à un étage de commande des alarmes 20 qui reçoit également la tension de sortie du circuit 19 correspondant à la hauteur moyuenne calculée.

Les trois types d'alarme qui entraînent la remontée rapide sont:
— hauteur calculée inférieure à la hauteur minimale

— entrée d'eau dans le poisson ou le cable
— présence d'écho dans le sondeur d'alarme.

L'étage 20 de commande des alarmes est réalisé au moyen de compteurs-décompteurs qui détectent les présences d'écho. Après détection d'un nombre donné d'absences d'écho, le circuit 20 se met en court-circuit et réalise au moyen du contacteur 21 la transmission de l'ordre de remontée rapide à la commande de remontée 22, en déconnectant le circuit normal d'asservissement.

En effet, en absence d'alarmes, le contacteur 21 assure le contact entre le calculateur de pilotage 23 (élaborant la tension de commande de l'angle des ailes et permettant le pilotage à une altitude de référence dont l'affichage est la tension de référence Ho) et l'amplificateur d'asservissement. Celui-ci reçoit en contre-réaction la recopie de l'angle des ailes au moyen d'un potentiomètre (31) et la valeur de l'angle d'assiette au moyen de l'ampli 26, la vitesse de rotation du moteur au moyen du démodulateur (25).

L'information de valeur de l'angle d'assiette prise en compte par l'ampli d'asservissement permet de stabiliser la fonction de transfer du système tout en augmentant la sécurité du véhicule par la limitation de son angle de descente.

Après modulation en 27, la tension de sortie de l'ampli d'asservissement 24 est appliquée au moyen d'un transformateur 28 sur le moteur de commande 29 de la position des ailes.

Le poisson comporte de plus un capteur de roulis 30 dont l'information est utilisée pour stabiliser en roulis le véhicule et donc améliorer la fonction pilotage.

En fonctionnement manuel, les sondeurs 14, 15 et 16 sont déconnectés. La référence est alors délivrée par la potentiomètre de commande des ailes et son ampli 26, la rotation de l'aile s'arrêtant des que l'information ramenée par la potentiomètre de recopie et son ampli 31 est égale à l'information de commande.

Ainsi qu'on l'a vu plus haut, le dispositif est complété par un tableau de contrôle 13 affichant sur les différents cadrans les paramètres de pilotage:
— profondeur d'immersion reçue du capteur de pression 32 sur le cadran 33
— altitude moyenne provenant de l'étage 19 de calcul sur le cadran 34
— angle des ailes sur le cadran 35 et
— assiette sur le cadran 36.

Un tel dispositif, utilisable sur tous les véhicules sous-marins remorqués permet donc un asservissement précis de leur altitude au fond, en supprimant les erreurs statiques d'asservissement par la prise en compte de l'information d'assiette et en limitant les risques dûs aux obstacles par la présence de l'étage de sommations des sécurités permettant une remontée rapide.

Le dispositif ne se limite pas à l'exemple cité ici mais peu accepter sans sortir du cadre de l'invention des variantes notamment, dans la nature des divers sondeurs ou dans la réalisation des différents étages de calcul et d'asservissement.

**Revendications**

1. Dispositif de pilotage d'un véhicule sous-marin notamment d'un véhicule porteur d'un sonar de cartographie marine à grande définition remorqué par un bateau au moyen d'un câble électroporteur, véhicule comportant un asservissement de sa position à la hauteur du fond, et comprenant à sa partie avant:

— un sondeur vertical (14) déterminant son altitude instantanée par rapport au fond, et son électronique associée

— un sondeur oblique (15) permettant d'anticiper la variation de pente du fond, et son électronique associée

— et une chaine électronique (12, 13) de traitement de signal et d'asservissement de position d'ailerons, comprenant unamplificateur d'asservissement (24) dont le signal de sortie commande le moteur (29) d'entrainement des ailes d'immersion (9), caractérisé en ce qu'il comporte en combinaison avec les moyens précités, un sondeur horizontal de détection des obstacles situés en avant du véhicule, et son électronique associée et un élément de calcul (19) de l'altitude moyenne du véhicule mesurée au moyen des sondeurs vertical et oblique, le sondeur horizontal et l'élément de calcul de l'altitude moyenne du véhicule agissant sur l'amplificateur d'asservissement (24) pour commander l'entrainement des ailes d'immersion.

2. Dispositif de pilotage selon la revendication 1 caractérisé en ce qu'il comporte un élémente de comparaison de l'altitude moyenne calculée avec une altitude minimale de navigation.

3. Dispositif de pilotage selon l'une quelconque des revendications 1 ou 2 caractérisé en ce qu'il comporte un dispositif d'alarme (20) pour permettre une commande de remontée rapide du véhicule.

4. Dispositif de pilotage selon la revendication 3 caractérisé en ce que le dispositif d'alarme (20) est situé en amont de l'amplificateur d'asservissement (24).

5. Dispositif de pilotage, selon l'une quelconque des revendications 1 à 4 comportant à l'intérieur du véhicule sous-marin un capteur dit d'entrée d'eau et une électronique associée pour transmettre un signal en cas de détection d'une entrée d'eau dans le véhicule, caractérisé en ce que les signaux d'altitude moyenne en sortie des comparateurs de détection, d'entrée d'eau et de détection d'un obstacle par le sondeur horizontal sont disposés aux entrées d'une porte "OU" dont la sortie est connectée à l'entrée du dispositif d'alarme.

6. Dispositif de pilotage selon l'une quelconque des revendications 1 à 5, caractérisé en ce que le véhicule comporte un pendule (26) de mesure d'assiette et un capteur (31) de position d'angle des ailes d'immersion, le signal d'assiette et le signal d'angle des ailes étant disposés en contre-réaction sur l'amplificateur d'asservissement (24).

7. Dispositif selon les revendications 1 à 6 caractérisé en ce que la chaîne électronique d'asservissement est disposée sur le navire tracteur, les informations en provenance du véhicule sous-marin (3) ou du navire étant transmises au moyen du câble électro-porteur (2) après multiplexage.

**Patentansprüche**

1. Lageregelungsvorrichtung eines Unterwasser-Fahrzeuges, insbesonders für das von einem Schiff mittels eines stromführenden Kabels geschleppte Tragfahrzeug einer Sonaranlage hoher Auflösung für die Seekartenzeichnung, zwar ein Fahrzeug mit einer selbsttätigen Steuerung dessen Schlepphöhe über Grund, die im Bugteil untergebracht ist und im wesentlichen aus:

— einem senkrecht strahlenden Echolot (14) für die Ermittlung der augenblicklichen Schlepphöhe über Grund, mit dessen mitgeschalteten Elektronik,

— einem schräg nach vorne strahlenden Echolot (15) für die Vorgewermittlung der Gefällenänderungen des Grundes, mit dessen mitgeschalteten Elektronik,

— sowie aus einer elektronischen Kette (12, 13) für die Verarbeitung des Signals und die Steuerung von Tiefenrudern über einen Steuerverstärker (24), dessen Ausgangssignal den Stellmotor (29) der Tiefenruder (9) ansteuert, besteht, dadurch gekennzeichnet, daß sie in Mitwirkung mit den vorerwähnten Mitteln ein waagerecht strahlendes Echolot für die Erfassung von Hindernissen vor dem Fahrzeug, mit dessen mitgeschalteten Elektronik, sowie ein Rechenelement (19) für die Berechnung der durchschnittlichen, von den senkrecht und schräg strahlenden Echoloten gemessen Schlepphöhge über Grund einsetzt und daß das waagerecht strahlende Echolot sowie das Rechenglied der durchschnittlichen Schlepphöhe über Grund gemeinsam den Steuerverstärker (24) für die Ansteuerung der Tiefenruder treiben.

2. Lageregelungsvorrichtung gemäß Anspruch 1, dadurch gekennzeichnet, daß sie ein Element für den Vergleich der berechneten, durchschnittlichen Schlepphöhe über Grund mit einer Mindestschlepphöhe einsetzt.

3. Lageregelungsvorrichtung gemäß eines beliebigen Anspruches 1 oder 2, dadurch gekennzeichnet, daß sie eine Warnvorrichtung (20) für das rasche Hochziehen des Fahrzeuges einsetzt.

4. Lageregelungsvorrichtung gemäß Anspruch 3, dadurch gekennzeichnet, daß die Warnvorrichtung (20) vor dem Steuerverstärker (24) in die Steuerkette eingreift.

5. Lageregelungsvorrichtung gemäß eines jeglichen Anspruches 1 bis 4, dadurch gekennzeichnet, daß im Inneren des Fahrzeuges ein sogenannter Wassereinbruchmelder mit dessen mitgeschalteten Elektronik für die Ermittlung eines Warnsignals bei Wassereinbruch in das Fahrzeug angebracht ist, dadurch gekennzeichnet, daß die Signale der durchschnittlichen Schlepphöhe am Ausgang des Vergleichskreises, der Wassereinbruchmeldung und der Erfassung eines Hindernisses durch das waagerecht strahlendes Echolot

den Eingängen eines "ODER"-Gatters geführt werden, dessen Ausgang die Warnvorrichtung steuert.

6. Lageregelungsvorrichtung gemäß eines jeglichen Anspruches 1 bis 5, dadurch gekennzeichnet, daß das Fahrzeug ein Pendel (26) für die Messung der Trimmlage sowie einen Winkelgeber (31) für die Meldung des Tiefenruderanstellwinkels einsetzt und daß die Trimmlage- und Ruderanstellungssignale den Rückkopplungskreis des Steuerverstärkers (24) ansteuern.

7. Vorrichtung gemäß Ansprüche 1 bis 6, dadurch gekennzeichnet, daß die elektronische Steuerkette auf dem Schleppschiff eingebaut ist und daß die Informationen aus dem Unterwasserfahrzeug (3) oder dem Schiff nach Multiplexierung über den stromleitenden Kabel (2) übermittelt werden.

## Claims

1. Control device for an underwater vehicle, in particular a vehicle carrying a high-definition marine cartography sonar towed by a ship by means of a towing/electric cable, the vehicle comprising a servosystem for its position at the level of the bottom, and including in its front part:
— a vertical sonde (14) determining its instantaneous altitude with relation to the bottom, and its associated electronics,
— an oblique sonde (15) allowing the slope variation of the bottom to be anticipated, and its associated electronics,
— and an electronic system (12, 13) for signal processing and with aileron position servosystem, comprising a servosystem amplifier (24) whose output signal controls the drive motor (29) of the submersion blades (9), characterized in that it includes in conjunction with the above said means, a horizontal sonde for the detection of obstacles located at the front of the vehicle, and its associated electronics and a computation element (19) of the mean altitude of the vehicle measured by means of the vertical and oblique sondes, the horizontal sonde and the computation element of the mean altitude of the vehicle acting on the servosystem amplifier (24) to control the drive of the submersion blades.

2. Control device according to claim 1, characterized in that it includes a mean altitude comparison element calculated with a minimum navigation altitude.

3. Control device according to either of claims 1 and 2, characterized in that it includes an alarm device (20) to allow a control for fast surfacing of the vehicle.

4. Control device according to claim 3, characterized in that the alarm device (20) is located upstream of the servosystem amplifier (24).

5. Control device according to any of claims 1 to 4 including inside the underwater vehicle a sensor known as a water inlet sensor and associated electronics to transmit a signal in case of detection of an inlet of water inside the vehicle, characterized in that the mean altitude signals at the output of the comparators of the water inlet detection and obstacle detection by the horizontal sonde are arranged at the inputs of an "OR" gate whose output is connected to the input of the alarm device.

6. Control device according to any of claims 1 to 5, characterized in that the vehicle comprises a trim measurement pendulum (26) and a submersion blade angle position sensor (31), the trim signal and the blade angle signal being arranged in counter-reaction on the servosystem amplifier (24).

7. Device in accordance with claims 1 to 6, characterized in that the servosystem electronic system is arranged on the towing ship, the information coming the underwater vehicle (3) or from the ship being transmitted by means of the towing/electric cable (21) after multiplexing.

FIG. 1

FIG.2

FIG. 3